# EUROPEAN PATENT SPECIFICATION

(11) **EP 1 207 291 B1**
(45) Date of publication and mention of the grant of the patent: **28.04.2004**
(21) Application number: 01204385.7
(22) Date of filing: 16.11.2001
(51) Int. Cl.: F02F 1/22, F02B 63/02, F02B 25/14

(54) **Low pollution two-stroke engine, in particular for gardening machines**
Zwei-Takt-Gartenmaschine mit niedrigem Ausstoss
Machine de jardinage à deux-temps à faible pollution

(30) Priority: 20.11.2000 IT VI000255
(43) Date of publication of application: 22.05.2002
(73) Proprietor: Blue Bird Industries Fabbrica Motori S.r.l., 36010 Zane' (Vicenza) (IT)
(72) Inventor: Fabris, Adriano, 36014 Santorso, Vicenza (IT); Bortoli, Nicola, 36015 Schio, Vicenza (IT)
(74) Representative: Zanardo, Giovanni

(56) References cited:
- EP-A- 1 048 831
- DE-A- 19 813 142
- US-A- 4 899 698
- PATENT ABSTRACTS OF JAPAN vol. 1998, no. 14, 31 December 1998 (1998-12-31) & JP 10 252565 A (NIPPON WALBRO:KK), 22 September 1998 (1998-09-22)
- PATENT ABSTRACTS OF JAPAN vol. 007, no. 079 (M-204), 31 March 1983 (1983-03-31) & JP 58 005424 A (NIHON KURINENJIN KENKYUSHO:KK), 12 January 1983 (1983-01-12)

## Description

The present invention provides a low pollution two-stroke engine for use in particular on gardening machines such as, for example, bush-cutters, lawn mowers, hedge trimmers, motor drills, motor pumps, chain saws, current generators or the like.

In particular the engine of the invention comprises means letting two air streams into the cylinder in each cycle, when the piston moves downwards (lower dead point) said air streams producing turbulence which pushes the mixture to the cylinder top, preventing a part of the mixture from getting out through the exhaust ports.

An engine is thus provided which has greater efficiency, better combustion and, thence, a lower pollution degree.

The invention, in particular, falls within the field of gardening implements and of small engine machines and is intended to provide a practical and light engine having a lower pollution degree than prior art engines.

In the last few years the problem of pollution caused by engines has got more and more important and manufacturers are looking for solutions which permit to reduce the engine noxious emissions.

With engines for small gardening implements, e.g. bush-cutters, industry provides two different solutions.

In one case industries utilize four-stroke engines, which are much less polluting than the conventional two-stroke engines used to this purpose, but which involve a heavier machine, higher costs, structural complications and the need for more accurate maintenance.

In other cases industry has studied solutions to reduce the pollution degree of two-stroke engines which, as known, are lighter, simpler and cheaper than equally powerful four-stroke engines.

In particular a method for reducing noxious emissions is known, such a method comprising the step of letting into the cylinder an air stream which improves combustion considerably.

For example, engines in which a flow of pure air is used to wash the inside of the cylinder and to avoid that the air/fuel mixture can escape before being burnt are known in the state of the art.

The US patent 4.899.698 illustrates a two-stroke engine in which a chamber is formed at the wall of the cylinder head, and in which a jet of pure air, obtained by means of a membrane pump arranged in the crankcase, is directed towards the wall where there is the inlet for the air/fuel mixture.

The pipe for feeding the pure air heads in a direction such that the air jet is directed against the edge of this chamber formed in the cylinder head. Here it is divided into two flows, one of which heads towards the outlet, promoting the expulsion of the burnt gases, whereas the other heads in an opposite direction, creating a contraflow which meets the mixture flow which, from the inlet opening, heads towards said chamber, to keep it separated from the gases which are discharged.

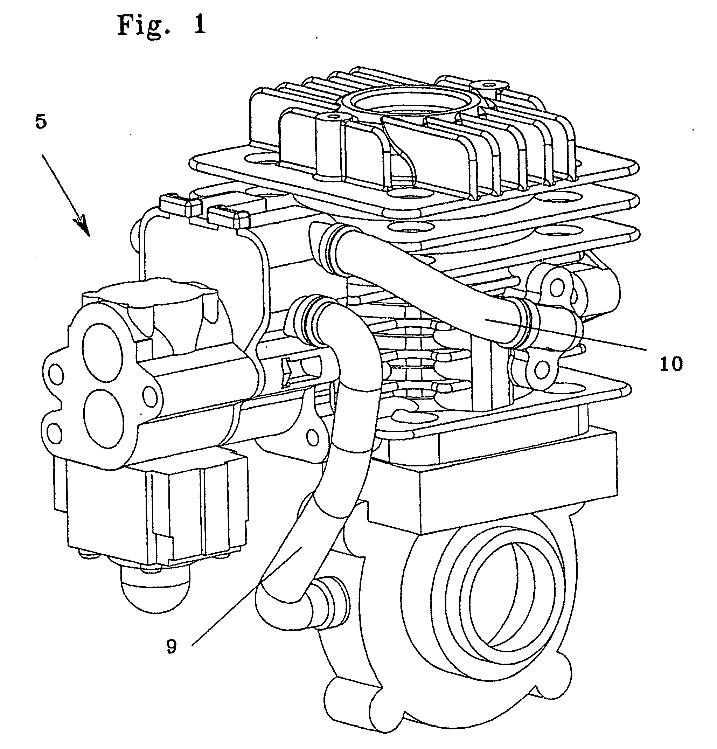

This situation is illustrated in figure 1 of the patent indicated above.

It concerns quite an efficient solution, but which has a certain constructive complexity, however, due to the need to carry out complex operations in the crankcase to form the clean air pump, and which imposes a limit to the maximum obtainable compression ratio, due to the presence of this chamber in the cylinder head.

The European patent application 1.048.831 illustrates a two-stroke engine in which devices suitable for directing a jet of pure air inside the cylinder, immediately before the mixture with the fuel is fed, are foreseen.

In figures 2 and 3 of this patent the engine is schematised, in which are formed, in the cylinder wall at the sides of the discharge opening 13a, a pair of ports 9a connected by means of pipes 10a and 109h to an inlet 10 for pure air upon which a one-way valve is arranged, and through pipes 109d respectively to the engine crankcase.

At each of the engine's cycles, when the piston moves downwards and opens the discharge opening 13a, into the cylinder firstly a jet of pure air is injected through the pipes 109a and subsequently, still through the same pipes, the air/fuel mixture coming from the crankcase is injected.

This solution, which requires a less complex construction of the cylinder than the previous one, however, has a limited efficiency since there is not a clean separation of the pure air and the fuel mixture, which are injected into the cylinder one after another, through the same pipes.

However, this method can be further improved and the inventor, after several experiments, has found out that, by directing two opposite air streams to the transfer pipes before the piston begins its stroke upwards, turbulence is produced which improves the combustion of the mixture which has just been sucked and prevents a part thereof from getting out through the exhaust ports, thus reducing considerably the unburnt hydrocarbons (HCs) which are let into the atmosphere.

According to the invention a manifold is positioned between the carburetor and the suction means, said manifold comprising a pipe for the air/fuel mixture, said pipe leading to the inlet port, and a chamber, being connected to the engine crankcase through a pumping pipe and two injection pipes which let two opposite streams of pure air into the cylinder, said air streams increasing the turbulence and confining the mixture to the cylinder top, preventing the mixture from getting out through the exhaust port.

The present invention will be now described in detail, by way of non limiting example, with reference to the accompanying drawings in which:
- Figure 1 is a pespective view of the engine of the invention and the engine manifold;
- Figure 2 is a perspective exploded view of the engine manifold of Figure 1;
- Figure 3 is a perspective view of the manifold seen from the opposite side;

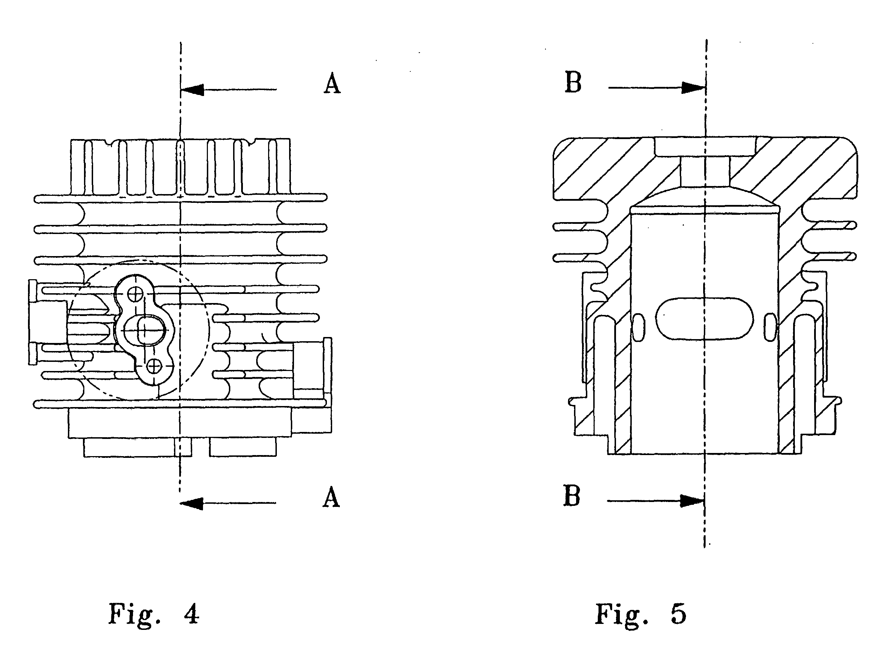

- Figure 4 is a view of the cylinder in the engine of the invention;
- Figure 5 is a vertically sectional view of the cylinder taken along line A-A of Figure 4;

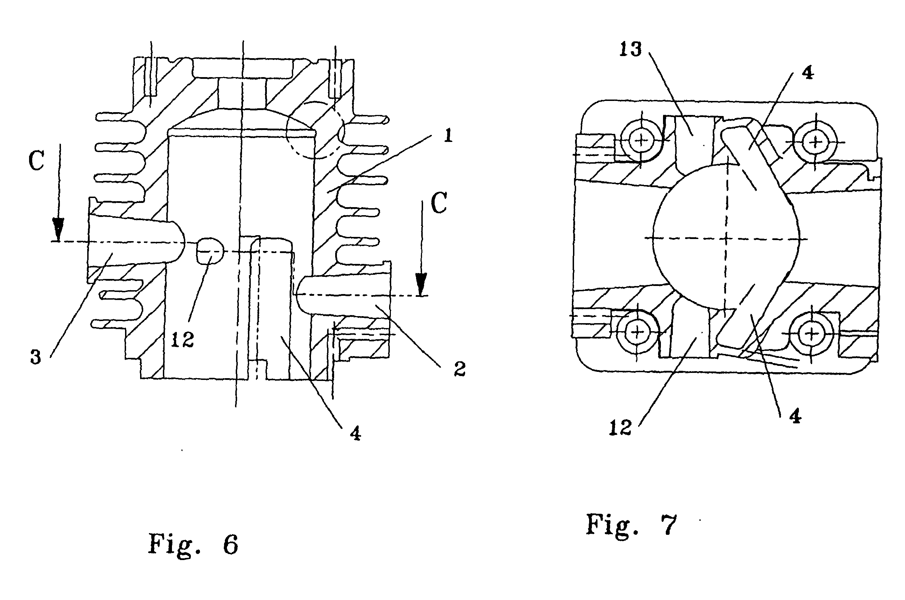

- Figure 6 is a vertically sectional view of the cylinder taken along line B-B of Figure 5;
- Figure 7 is a horizontally sectional view of the cylinder taken along line C-C of Figure 6.

With reference to the accompanying drawings, numeral 1 indicates the cylinder of an engine according to the invention, whereas numerals 2, 3 and 4 respectively indicate the suction pipe, the exhaust pipe and the transfer pipes.

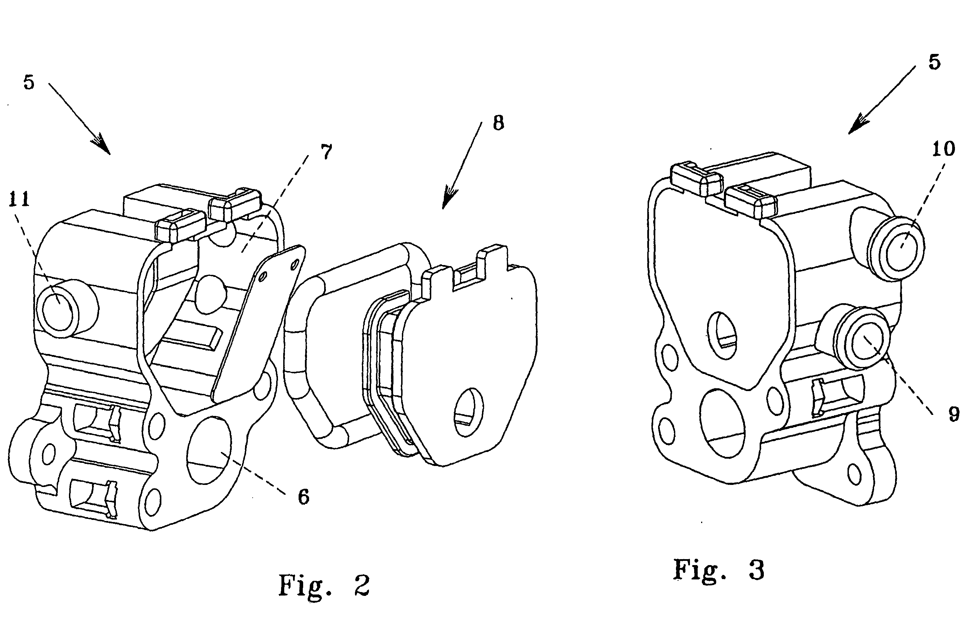

A manifold, shown with numeral 5 in Figure 1 and the components of which can be seen in detail in the exploded view of Figure 2, is provided between the cylinder and the carburetor.

According to the invention the manifold 5 comprises a pipe 6 for the passage of the air/fuel mixture which is sucked by the engine and a chamber 7 receiving pure air.

A unidirectional valve 8, e.g. a plate valve or the like, is set up at the entrance of the chamber 7, said valve letting the external air into the chamber, but not out of it.

Three pipes 9, 10 and 11 start from the walls of the chamber 7.

The pipe 9 connects the chamber 7 with the engine crankcase.

The pipes 10 and 11 connect the inside of the chamber 7 with a pair of opposite air inlet tubes 12 and 13 provided inside the cylinder preferably between the transfer pipes and the exhaust pipe.

The tubes 12 and 13 are opposite one another and preferably have an end portion at the inlet into the cylinder which has an inclined edge (in the tapering direction of the opening) so as to direct the air jet towards the suction opening.

The operation takes place as follows.

As the piston moves upwards inside the cylinder 1, the depression obtained in the engine crankcase causes the suction of the air/fuel mixture from the pipe 6 of the manifold 5 and of pure air from the chamber 7 by means of the pipe 9.

During this step the plate valve 8 opens as a result of the depression obtained in the chamber 7, due to the air suction in the engine crankcase.

When the piston reverses and moves downwards, it compresses the mixture in the engine crankcase and the pure air in the chamber 7 of the manifold 5.

During its motion to the bottom dead center, the piston simultaneously clears the ports of the transfer pipes 4 and of the air transfer tubes 12 and 13.

The plate valve 8 is kept closed by the pressure provided by the piston thrust inside the chamber 7 and the compressed air then gets out through the pipes 10 and 11 from which it gets to the transfer tubes 12 and 13.

The transfer tubes 12 and 13 are positioned between the exhaust port and the transfer pipes 4.

Here the air is let into the cylinder at high speed, thus causing such strong turbulence that the air/fuel mixture is pushed towards the cylinder top, separating this mixture from the exhaust gas by means of an air barrier.

A part of the pure air will get out through the exhaust port whereas the whole of the mixture with the fuel will be burnt inside the cylinder, thus reducing the HC emissions.

As it will be apparent from the description, the engine of the invention has several advantages.

Due to its reduced dimensions the invention can be easily fitted to the already existing engines.

The invention needs few modifications and permits to use partly the already existing systems and/or to adapt them with few changes.

The air receiver in the manifold is pneumatically filled and emptied due to the pressure variation in the engine crankcase.

Those skilled in the art can then provide several modifications and variations, all of which, however, fall within the scope of the present invention.

## Claims

1. A low pollution two-stroke engine, in particular for gardening and small agriculture machines, in which means for directing a jet of pure air into a cylinder (1) of the engine are provided and wherein a manifold (5) is placed between said cylinder (1) and a carburettor, **characterised in that** said manifold (5) comprises a first pipe (6) for feeding an air/fuel mixture, which is sucked by the engine through a suction pipe (2), and a chamber (7) receiving pure air and communicating with the atmosphere through a unidirectional valve (8), a second pipe (9) connecting said chamber (7) with the engine crankcase and a pair of third pipes (10, 11) connecting said chamber (7) with a pair of opposite air inlet tubes (12, 13) facing the area inside the cylinder (1) between an exhaust pipe (3) and the transfer pipes (4) of the engine, so that, after the piston of said cylinder (1) has moved to the bottom dead centre, pure air is blown into said cylinder (1) through said third pipes (10, 11), said third pipes (10, 11) being connected to said air inlet tubes (12, 13), which are adjacent to said transfer pipes (4) of the engine.

2. A low pollution two-stroke engine as claimed in claim 1, **characterised in that** said unidirectional valve (8) is constituted by a plate valve, which is positioned at the entrance of said chamber (7) and which opens in the air inlet direction, preventing however the air from getting out.

3. A low pollution two-stroke engine as claimed in claim 1, **characterised in that** said pair of opposite air inlet tubes (12, 13) have end portions with inclined edges.

## Patentansprüche

1. Umweltfreundliche Zweitakt-Brennkraftmaschine, insbesondere für den Einsatz im Gartenbau und bei kleinen Maschinen in der Landwirtschaft, bei welcher eine Vorrichtung zum Richten eines Düsenstrahls aus reiner Luft in einen Zylinder (1) der Brennkraftmaschine vorgesehen ist, und eine Rohrverzweigung (5) zwischen dem Zylinderkammer (1) und einem Vergaser vorgesehen ist,
**dadurch gekennzeichnet, dass** die Rohrverzweigung (5) ein erstes Rohr (6) zum Zuführen einer Luft/Kraftstoffmischung aufweist, die von der Brennkraftmaschine durch ein Saugrohr (2) angesaugt wird, sowie eine Kammer (7), welche reine Luft empfängt, und mit der Atmosphäre über ein in einer Richtung wirkendes Ventil (8) in Verbindung steht, ein zweites Rohr (9), das die Kammer (7) mit dem Kurbelgehäuse der Brennkraftmaschine verbindet, sowie ein Paar dritter Rohre (10, 11), welches die Kammer (7) mit einem Paar entgegengesetzter Lufteinlassrohre (12, 13) verbindet, welche dem Bereich innerhalb des Zylinders (1) zwischen einem Auslassrohr (3) und den Verbindungsrohren (4) der Brennkraftmaschine gegenüberliegen, so dass, nachdem der Kolben des Zylinders (1) sich zum unteren Totpunkt bewegt hat, reine Luft in den Zylinder (1) über die dritten Rohre (10, 11) eingeblasen wird, wobei die dritten Rohre (10, 11) mit den Lufteinlassrohren (12, 13) verbunden sind, welche den Übertragungsrohren (4) der Brennkraftmaschine benachbart sind.

2. Umweltfreundliche Zweitakt-Brennkraftmaschine nach Anspruch 1, **dadurch gekennzeichnet, dass** das in eine Richtung wirkende Ventil (8) als Plattenventil ausgebildet ist, das an dem Eingang der Kammer (7) angeordnet ist, und sich in der Lufteinlassrichtung öffnet, jedoch verhindert, dass die Luft hinausgelangt.

3. Umweltfreundliche Zweitakt-Brennkraftmaschine nach Anspruch 1, **dadurch gekennzeichnet, dass** das Paar der gegenüberliegenden Lufteinlassrohre (12, 13) Endabschnitte mit abgeschrägten Kanten aufweist.

## Revendications

1. Moteur à deux temps à faible pollution, en particulier pour machines de jardinage et petites machines agricoles, dans lequel est prévu un moyen pour diriger un jet d'air pur dans un cylindre (1) du moteur et dans lequel un collecteur (5) est placé entre ledit cylindre (1) et un carburateur, **caractérisé en ce que** ledit collecteur (5) comprend un premier conduit (6) pour amener un mélange air/carburant, qui est aspiré par le moteur via un conduit d'aspiration (2), et une chambre (7) recevant de l'air pur et en communication avec l'atmosphère via une valve unidirectionnelle (8), un deuxième conduit (9) reliant ladite chambre (7) au carter moteur et une paire de troisièmes conduits (10, 11) reliant ladite chambre (7) à une paire de tubes d'entrée d'air opposés (12, 13) faisant face à la zone à l'intérieur du cylindre (1) entre un conduit d'échappement (3) et les conduits de transfert (4) du moteur, de sorte que, après que le piston dudit cylindre (1) a atteint le point mort bas, de l'air pur est envoyé dans ledit cylindre (1) via lesdits troisièmes conduits (10, 11), lesdits troisièmes conduits (10, 11) étant connectés auxdits tubes d'entrée d'air (12, 13), qui sont adjacents auxdits conduits de transfert (4) du moteur.

2. Moteur à deux temps à faible pollution selon la revendication 1, **caractérisé en ce que** ladite valve unidirectionnelle (8) est constituée par une valve à plaque, qui est positionnée à l'entrée de ladite chambre (7) et qui s'ouvre dans la direction de l'entrée d'air, tout en empêchant l'air de sortir.

3. Moteur à deux temps à faible pollution selon la revendication 1, **caractérisé en ce que** lesdits tubes d'entrée d'air opposés (12, 13) ont des parties d'extrémité à bords inclinés.
